# FASCICULE DE BREVET EUROPEEN

(11) **EP 2 131 486 B1**
(45) Date de publication et mention de la délivrance du brevet: **09.02.2011**
(21) Numéro de dépôt: 09160175.7
(22) Date de dépôt: 13.05.2009
(51) Int. Cl.: H02P 6/16, H02P 6/14

(54) **Dispositif de commande d'une machine électrique tournante synchrone polyphasée et machine électrique tournante synchrone polyphasée comprenant un tel dispositif**
Vorrichtung zur Steuerung einer elektrischen mehrphasigen synchronen Rotationsmaschine und eine elektrische mehrphasige synchrone Rotationsmaschine mit einer derartigen Vorrichtung
Device for controlling a polyphase rotating electrical machine and a polyphase rotating electrical machine comprising such device

(30) Priorité: 04.06.2008 FR 0853700
(43) Date de publication de la demande: 09.12.2009
(73) Titulaire: Valeo Equipements Electriques Moteur, 94046 Créteil Cedex (FR)
(72) Inventeur: Bernard, François-Xavier, 94000, CRETEIL (FR); Louise, Christophe, 94140, ALFORVILLE (FR); Doffin, Hugues, 92290, CHATENAY MALABRY (FR)

(56) Documents cités:
- US-A- 5 200 675
- US-A- 5 872 435
- US-A1- 2007 132 409

## Description

L'invention concerne un dispositif de commande pour une machine électrique tournante synchrone polyphasée.

L'invention concerne plus particulièrement un dispositif de commande d'un convertisseur de courant électrique alternatif-continu associé à une telle machine électrique tournante synchrone polyphasée et disposé entre celle-ci et une unité de stockage d'énergie électrique, comprenant une batterie rechargeable.

Elle s'applique plus particulièrement à des machines réversibles, dites alterno-démarreurs, utilisées dans l'industrie automobile, aussi bien en mode alternateur qu'en mode moteur au démarrage ou en aide au décollage (en mode dit "boost" ), typiquement à partir de 500 tours/mn.

Dans le cadre de l'invention, le terme "polyphasé" concerne plus particulièrement des machines électriques tournantes triphasées ou hexaphasées, mais peut aussi concerner des machines électriques tournantes biphasées ou fonctionnant sur un nombre de phases plus élevé.

Pour fixer les idées, on se placera dans ce qui suit dans le cas de l'application préférée de l'invention, à savoir le cas d'une machine électrique tournante réversible triphasée du type alterno-démarreur, sans que cela limite en quoi que ce soit la portée de l'invention.

Comme il est bien connu, une machine électrique tournante réversible comporte un alternateur comprenant :
- un rotor constituant un inducteur associé classiquement à deux bagues collectrices et deux balais par lesquels est amené un courant d'excitation; et
- un stator polyphasé portant plusieurs bobines ou enroulements, trois dans l'exemple de réalisation considéré, constituant un induit, qui sont connectés en étoile, ou le plus souvent en triangle dans le cas d'une structure triphasée, et qui délivrent vers un pont redresseur, en fonctionnement alternateur, une puissance électrique convertie. La machine comporte deux paliers, un avant et un arrière, pour la fixer au moteur thermique et pour fixer le stator. Le stator entoure le rotor. Le rotor est porté par un arbre supporté par les paliers avant et arrière. Les balais sont reliés à un régulateur de l'alternateur pour maintenir la tension de l'alternateur à une tension voulue pour une batterie selon qu'elle est à vide ou en charge.

L'alternateur permet de transformer un mouvement de rotation du rotor inducteur, entraîné par le moteur thermique du véhicule, en un courant électrique induit dans les bobinages du stator.

L'alternateur peut aussi être réversible et constituer un moteur électrique, ou machine électrique tournante, permettant d'entraîner en rotation, via l'arbre de rotor, le moteur thermique du véhicule. Cet alternateur réversible est appelé alternateur-démarreur ou encore alterno-démarreur. Il permet de transformer l'énergie mécanique en énergie électrique et vice versa.

Ainsi, en mode alternateur, l'alterno-démarreur charge notamment la batterie du véhicule tandis qu'en en mode démarreur l'alterno-démarreur entraîne le moteur thermique appelé également moteur à combustion interne, du véhicule automobile pour son démarrage.

Dans les machines réversibles de l'industrie automobile, par exemple, fonctionnant selon les modes moteur ou démarreur, le stator doit être piloté en courant de manière à appliquer à tout moment au rotor le couple nécessaire pour imprimer la rotation requise pour le fonctionnement du moteur. Le couple appliqué au rotor, et donc le courant à fournir aux phases du stator, est une fonction sinusoïdale de la position angulaire, repérée par un angle θ, du rotor par rapport au stator.

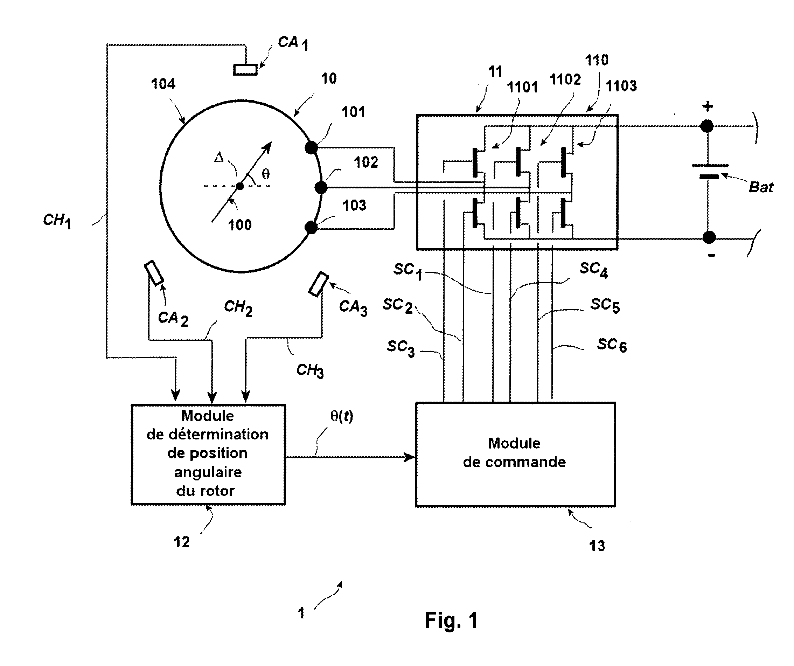

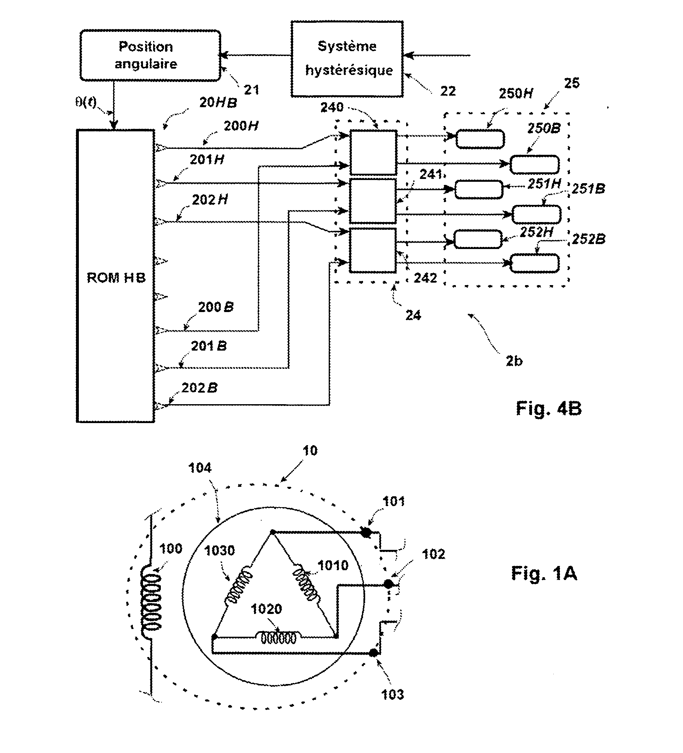

La figure 1, placée en fin de la présente description, illustre schématiquement un système complet 1 de détermination de la position angulaire θ(*t*) du rotor d'un alterno-démarreur triphasé et de commande de cet organe, soit en mode alternateur, soit en mode moteur (démarreur).

Le système 1 comprend quatre sous-systèmes principaux : un alterno-démarreur 10, un convertisseur 11 de courant électrique alternatif-continu réversible, un module 13 de commande de ce convertisseur et un module 12 de détermination de position angulaire θ du rotor 100 (symbolisé par une flèche tournant autour de son axe de rotation Δ).

Le convertisseur 11 est généralement constitué d'un pont de redresseurs semi-conducteurs 110, comprenant trois branches de deux transistors MOS-FET de puissance en série, 1101 à 1103, qui seront dénommés ci-après, de façon arbitraire, "hauts" et "bas" une pour chaque phase. Une telle structure est bien connue de l'Homme de Métier et il est inutile de la décrire plus avant. Les points milieux des branches de sortie, 1101 à 1103, constituent les trois sorties du convertisseur 11. Les extrémités des branches, 1101 à 1103, sont reliés aux sorties positive "+" et négative '-" d'un organe de stockage d'énergie électrique, par exemple une batterie *Bat*, dont est muni le véhicule (non représenté sur la figure 1).

En mode alternateur, l'alterno-démarreur 10 alimente en courant alternatif triphasé le convertisseur 11 par ses trois sorties, 101 à 103, qui correspondent aux jonctions entre les trois bobinages constituant le stator 104 de l'alterno-démarreur 10. Celui-ci convertit le courant alternatif triphasé en courant continu de façon à (re)charger la batterie *Bat*. Celle-ci à son tour alimente divers organes de ce véhicule : électronique de bord, climatisation, phares, etc.

La figure 1A illustre de façon plus détaillée la configuration de l'alterno-démarreur 10 de la figure 1. Le stator 104 comprend trois enroulements, 1010 à 1030, à configuration triangle, dont les sommets sont reliés aux sorties 101 à 103.

En mode moteur, c'est-à-dire en mode démarreur, c'est l'alterno-démarreur 10 qui est alimenté en énergie électrique triphasée par le convertisseur réversible 11, qui fonctionne en mode générateur de courant triphasé.

Dans cette forme de réalisation de l'invention relative à une machine électrique triphasé et donc un pont à transistors à trois branches, les transistors MOS-FET des branches, 1101 à 1103, sont commandés selon une séquence appropriée de six signaux de commandes, *SC*₁ à *SC*₆, et cela quel que soit le mode considéré. Les six signaux de commandes, *SC*₁ à *SC*₆, sont générés par le module de commande 13. Comme il est bien connu également, ces signaux, *SC*₁ à *SC*₆, doivent être générés en synchronisme avec la position angulaire θ du rotor 100 qui détermine les phases relatives des courants délivrés par les sorties, 101 à 103, de l'alterno-démarreur 10 (mode de fonctionnement alternateur), ou transmis à ces sorties (mode de fonctionnement démarreur).

Il est nécessaire de ce fait de déterminer la position angulaire θ du rotor 100 avec une grande précision pour obtenir un fonctionnement correct des ponts redresseurs, 1101 à 1103, notamment pour éviter tout risque de détérioration des composants semi-conducteurs, mais aussi et surtout, en mode moteur, ou démarreur, un couple optimisé fourni par l'alterno-démarreur 10.

C'est la fonction qui est dévolue au module 12 de détermination de la position angulaire du rotor 100, de façon à générer un signal θ(*t*) représentant la variation instantanée de la position angulaire mesurée et à le transmettre en entrée du module de commande 13.

Dans l'Art Connu, divers procédés ont été proposés à cette fin.

La Demanderesse a notamment proposé dans la demande de brevet international WO 2006/010864 A2, un dispositif et un procédé de détermination de la position d'un rotor d'une machine électrique tournante comprenant un stator, qui permet d'obtenir la position angulaire précise recherchée tout en étant bon marché, simple à mettre en oeuvre et peu sensible aux perturbations magnétiques.

Le dispositif enseigné dans cette demande de brevet comprend une pluralité de capteurs de champ magnétique fixes par rapport au stator de la machine électrique tournante et aptes à délivrer une série de premiers signaux représentatifs d'un champ magnétique tournant détecté par ces capteurs, et des moyens de traitement de ces premiers signaux par un opérateur apte à fournir une série de deuxièmes signaux sinusoïdaux dépendant de la position angulaire atteinte par le rotor.

Dans un exemple de réalisation, illustré par la figure 1 placée en fin de la présente description, on utilise trois capteurs à effet Hall linéaires, *CA*₁ à *CA*₃, placés à 120° électrique sur la machine électrique tournante, en l'occurrence l'alterno-démarreur 10, en vis-à-vis d'une cible (non représentés sur la figure 1) solidaire du rotor 100 et magnétisée alternativement Nord/Sud pour chaque pôle de la machine. Pour une plus ample description, on se reportera avec profit à la description de la demande de brevet international WO 2006/010864 A2 précitée.

Les capteurs, *CA*₁ à CA₃, délivrent en sortie une série de trois signaux, *CH*₁ à *CH*₃, lorsque l'alterno-démarreur 10 est en rotation. On constate expérimentalement que ces signaux, que l'on qualifiera de "bruts", comportent généralement un fort taux d'harmoniques, notamment un taux important d'harmonique 3 et que leurs amplitudes relatives sont différentes. Il est donc difficile de construire à partir de ces trois signaux bruts, très imparfaits, deux signaux se rapprochant d'une fonction sinusoïdale idéale (c'est-à-dire exempts d'harmoniques), d'amplitudes identiques, d'offsets nuls et déphasés de façon non triviale (déphasage non multiple de 180°), qui constituent les deuxièmes signaux précités.

Pour pallier cette difficulté, le principe de base est de trouver deux combinaisons linéaires distinctes qui permettent, d'obtenir les deux sinusoïdes désirées, tout en s'affranchissant le mieux possible des problèmes rappelés ci-dessus.

En première approximation, il est possible d'admettre que les capteurs, *CA*₁ à *CA*₃, ont des caractéristiques identiques ou pour le moins très proches, qu'il sont placés dans un même environnement thermique et électromagnétique et donc que les signaux délivrés par ces capteurs gardent des caractéristiques communes. Ces hypothèses conduisent à considérer que :
- leurs offsets évoluent en même temps en fonction d'un champ perturbateur éventuel (comme, par exemple, la magnétisation du rotor) ;
- leurs taux d'harmonique d'ordre 3 sont très semblables et en phase avec leurs harmoniques fondamentaux ; et
- les signaux électriques générés par ces capteurs sont déphasés d'environ 120°.

Ces hypothèses rendent possible le choix de deux combinaisons linéaires qui annulent en partie l'harmonique d'ordre 3 et les offsets. De façon simple, en choisissant pour combinaisons linéaires les différence entre deux signaux de sortie de capteurs on obtient deux signaux déphasés de 60° et qui répondent aux critères de choix exprimés plus haut.

On constate alors que les signaux obtenus se rapprochent de fonctions sinusoïdales idéales : ils sont recentrés et contiennent moins d'harmoniques que les signaux bruts.

Néanmoins, les amplitudes de ces signaux ne sont pas complètement identiques et leurs offsets ne sont pas parfaitement nuls. Il s'ensuit qu'une étape de calibration en usine, en fin de chaîne de chaîne de fabrication, s'avère nécessaire.

Pour ce faire, on peut soustraire une valeur réglable à chacun des signaux afin d'annuler chaque offset. Cette valeur signée peut être obtenue de manière purement analogique, par exemple à l'aide d'un potentiomètre ou d'un pont résistif ajustable (par exemple en mettant en oeuvre un procédé dit de "trimmage laser"), ou semi-analogique en utilisant une valeur numérique convertit en valeur analogique. Enfin, une solution entièrement numérique est également possible si les signaux sont convertis en signaux numériques.

En ce qui concerne la calibration de l'amplitude, un seul un réglage est nécessaire car il suffit que les amplitudes des signaux soient égales. Pour ce faire on peut recourir à un amplificateur à gain réglable. Cet amplificateur à gain variable peut être purement analogique, semi-analogique ou entièrement numérique. Il est à noter que la calibration en amplitude aurait pu être réalisée au préalable sur deux des signaux bruts délivrés par les capteurs, *CA*₁ à *CA*₃, afin que les combinaisons linéaires ultérieures soient plus efficaces pour enlever l'harmonique d'ordre 3. L'inconvénient de ce procédé réside dans le fait qu'un réglage supplémentaire est nécessaire et que l'on ne corrige pas d'éventuelles disparités d'amplification des combinaisons linéaires elles-mêmes.

Une fois les deux sinusoïdes obtenues, il devient possible d'extraire directement la valeur de la position angulaire θ. Pour ce faire, en divisant les deux signaux on s'affranchit de l'amplitude, puis, à l'aide d'une fonction mathématique ou d'un tableau, on peut inverser la fonction et déterminer le quadrant angulaire grâce aux signes des signaux. Pour fixer les idées, à titre d'exemple non limitatif, si le déphasage entre signaux est de ϕ = 90° par exemple, il s'agit d'une fonction ArcTangente. De nouveau, pour une plus ample description du procédé, on se reportera avec profit à la description de la demande de brevet international WO 2006/010864 A2 précitée.

Dans le cadre de l'invention, on peut recourir à ce procédé ou à tout autre procédé connu permettant de déterminer la position angulaire θ du rotor 100 avec une bonne précision.

Le module 12 de détermination de position angulaire θ du rotor 100 délivre sur sa sortie un signal θ(*t*) représentatif de cette position angulaire. Ce signal peut-être de type analogique, ou, de façon préférentielle de type numérique si le module 12 est pourvu d'un circuit de conversion analogique-numérique (non représenté).

Le signal est transmis en entrée d'un module de commande 13 destiné à élaborer une série de signaux de commande des éléments de commutation du convertisseur de courant électrique alternatif-continu réversible 11, éléments de commutation généralement constitués par des transistors MOS-FET de puissance 110, comme il a été rappelé. En l'occurrence, s'agissant d'un alterno-démarreur triphasé 10, le convertisseur réversible 11 comprend trois branches de deux transistors MOS-FET en série disposés entre les pôles "+" et "-" de la batterie *Bat*.

Dans cette forme de réalisation pour une machine électrique triphasée, le module de commande 13 doit donc générer une série de six signaux de commandes ces signaux, *SC*₁ à *SC*₆, qui doivent être, comme il a été rappelé, en parfait synchronisme avec la position angulaire θ du rotor 100 qui détermine les phases relatives des courants délivrés par les sorties, 101 à 103, de l'alterno-démarreur 10, selon une séquence temporelle appropriée, de façon à obtenir un fonctionnement correct des ponts redresseurs, notamment pour éviter tout risque de détérioration des composants semi-conducteurs, mais aussi et surtout, en mode moteur ou démarreur, un couple optimisé fourni par l'alterno-démarreur 10.

Des circuits numériques permettant de générer des signaux de commande, de type "tout ou rien", à configuration carrée ou rectangulaire, sont bien connus en soi.

Cependant, le besoin se fait sentir de pouvoir non seulement générer de tels signaux, mais aussi de pouvoir modifier à volonté leur configuration, de façon très souple, sans augmenter significativement le coût et la complexité des circuits du module de commande 12, notamment pour pouvoir passer d'un fonctionnement dit "pleine onde" à un autre mode de fonctionnement, sans devoir modifier substantiellement les circuits constituant ce module, voire devoir entièrement les changer (par exemple par substitution d'une carte complète de circuits électronique ou du module proprement dit par un autre).

Comme il a été rappelé, dans le cadre de l'invention le terme "polyphasé" vise indifféremment des machines biphasées, triphasées, hexaphasées, de façon plus générale fonctionnant sur un nombre de phases égal à *n* (étant un entier supérieur à 1). Le besoin se fait donc également sentir de pouvoir accommoder ces machines diverses quel que soit *n*, ce de nouveau sans devoir modifier "matériellement" ou changer les circuits constituant le module de commande.

L'invention a pour objet de répondre aux besoins exposés ci-dessus.

Pour ce faire, selon une première caractéristique, le dispositif selon l'invention exploite la valeur numérisée de la position angulaire pour adresser une table contenant des ordres de commandes des éléments de commutation de puissance du convertisseur de courant électrique alternatif-continu.

De façon avantageuse, la table précitée est constituée par une mémoire à lecture seule, du type dit R.O.M. (pour "Read Only Memory").

L'avantage d'un tel dispositif est de pouvoir aisément passer d'une machine polyphasé d'ordre *n*, par exemple triphasée, à une machine polyphasée d'ordre supérieure ou inférieur, par exemple hexaphasée, en ne changeant que cette table ce qui constitue une souplesse importante dans le cas d'applications se déclinant pour plusieurs types de machines. Par exemple avec une table de mots de *n* bits on peut, sans changer la structure de la carte, commander une machine d'un nombre *n* phases quelconque, chaque bit commandant une seule phase.

Dans un mode de réalisation pratique qui sera détaillé ci-après, les éléments de commutation de puissance, dit bas et haut de chaque branche, c'est-à-dire de chaque phase sont commandés par un même bit mais de manière opposée avec classiquement un temps mort réalisant ainsi une commande dite « pleine onde ».

Dans un mode de réalisation supplémentaire du dispositif selon l'invention, si une commande pleine onde n'est pas appropriée, il est possible d'adjoindre à la première table une table supplémentaire adressée de façon identique, ce qui permet de commander séparément les éléments de commutation de puissance bas et haut de chaque branche.

Il est également possible de n'utiliser qu'une seule table contenant les deux séries d'ordres de commande et deux séries de sortie, une première série de sorties commandant les éléments de commutation de puissance haut de chaque branche et une deuxième série de sorties commandant les éléments de commutation de puissance bas de chaque branche.

Dans un mode de réalisation supplémentaire encore, le dispositif de commande selon l'invention génère des signaux de commande modulé en largeur d'impulsion ("MLI" ou "PWM" pour "Pulse Width Modulation selon la dénomination anglo-saxonne couramment utilisée). Pour ce faire, il comprend des circuits supplémentaire effectuant un "ET logique" entre les signaux de commande générés par la table et un signal carré à rapport cyclique variable de fréquence plus élevée que la fréquence électrique de la machine électrique tournante.

L'invention a donc pour objet principal un dispositif de commande d'un convertisseur de courant électrique alternatif-continu associé à une machine électrique tournante synchrone polyphasée comprenant un rotor et un stator comprenant une pluralité d'enroulements connectés entre eux en leurs extrémités, en nombre égal aux nombre de phases, ledit convertisseur de courant électrique alternatif-continu étant disposé entre ladite machine électrique tournante synchrone polyphasée et une unité de stockage d'énergie électrique continue comportant des bornes dites positive et négative, ledit convertisseur de courant électrique alternatif-continu comprenant, pour chaque phase, une branche de deux commutateurs de puissance en série, dits haut et bas, disposée entre lesdites bornes positive et négative, le point milieu entre deux commutateurs de puissance, haut et bas, constituant des entrées et/ou des sorties dudit convertisseur de courant électrique alternatif-continu et étant reliés aux dites extrémités de connexions desdits enroulements, le dispositif de commande comprenant des moyens de génération d'un signal de sortie représentant la position angulaire dudit rotor.

Conformément à l'invention, le dispositif de commande de convertisseur comprend au moins une table numérique comprenant une pluralité d'emplacements de mémoire stockant des mots numériques adressées par ledit signal de position angulaire de rotor et délivrant sur sa sortie des signaux binaires de commande en nombre égal au nombre desdites phases, chaque signal binaire de commande commandant la commutation desdits commutateurs de puissance, hauts et bas, selon une séquence temporelle prédéterminée fonction de la valeur instantanée dudit signal de position angulaire de rotor adressant lesdits mots numériques.

Selon un autre aspect, l'invention concerne aussi une machine électrique tournante synchrone polyphasée comprenant un tel dispositif.

L'invention va maintenant être décrite de façon plus détaillée en se référant aux dessins annexés, parmi lesquels :
- la figure 1 illustre schématiquement un exemple de réalisation d'un dispositif de détermination de la position angulaire d'un rotor d'un alterno-démarreur et de commande d'un convertisseur de courant électrique alternatif-continu selon l'art connu ;
- la figure 1A est une figure de détail illustrant la configuration de l'alterno-démarreur de la figure 1 ;
- la figure 2A illustre schématiquement un dispositif de commande d'un convertisseur de courant électrique alternatif-continu d'une machine électrique tournante synchrone triphasée selon l'invention, dans un mode de fonctionnement dit "plein onde" ;

- la figure 2B illustre un bloc-diagramme des fonctions d'un module de filtrage hystérésique mis en oeuvre dans le dispositif de la figure 2A implémentant un système de filtrage hystérésique ;
- la figure 3 est un diagramme illustrant deux modes de commande ;
- les figures 4A et 4B illustrent schématiquement deux variantes de réalisation d'un dispositif de commande d'un convertisseur de courant électrique alternatif-continu d'une machine électrique tournante synchrone triphasé selon l'invention, dans un mode de fonctionnement différent du mode dit "plein onde" ;
- la figure 5 illustre schématiquement un dispositif de commande d'un convertisseur de courant électrique alternatif-continu d'une machine électrique tournante synchrone triphasé selon l'invention, dans un mode de fonctionnement mettant en oeuvre une modulation de largeur d'impulsion ; et
- la figure 6 illustre schématiquement un exemple de réalisation complet d'un dispositif de commande d'un convertisseur de courant électrique alternatif-continu d'une machine électrique tournante synchrone triphasé selon l'invention, permettant divers modes de fonctionnement.

Dans ce qui suit, sans en limiter en quoi que ce soit la portée, on se placera ci-après dans le cadre de l'application préférée de l'invention, sauf mention contraire, c'est-à-dire dans le cas d'un dispositif de commande d'un convertisseur de courant électrique alternatif-continu pour un alterno-démarreur triphasé.

Dans ce qui suit également, les éléments communs à plusieurs figures portent les mêmes références et ne seront re-décrits qu'en tant que de besoin

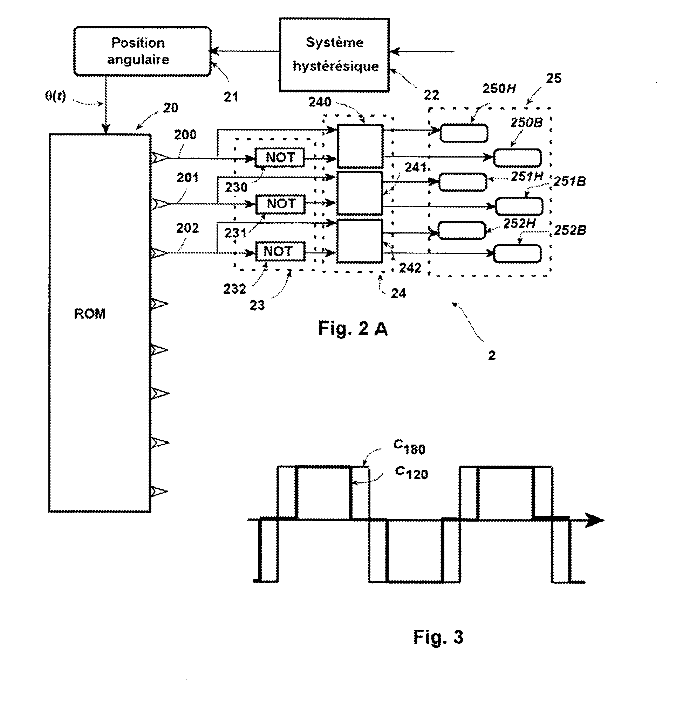

La figure 2A illustre schématiquement un dispositif de commande 2 d'un convertisseur de courant électrique alternatif-continu réversible pour un alterno-démarreur triphasé, en mode de fonctionnement dit "plein onde".

Selon une des caractéristique essentielle de l'invention, le dispositif de commande 2 met en oeuvre une table numérique 20 adressée par un signal numérique représentant la position angulaire θ(*t*) du rotor 101 (figure 1, fournie par le module 21. Comme il a été rappelé, cette position angulaire peut être déterminée par divers procédé, par exemple par le procédé enseigné par la demande de brevet international précitée WO 2006/010864 A2 au nom de la Demanderesse.

De façon pratique, la table numérique 20 peut consister en une mémoire à lecture seule, du type dit "R.O.M." (pour "Read Only Memory"). Cette mémoire stocke des mots de n bits. Avec une mémoire stockant des mots de *n* bits, il est possible, sans changer la structure, de commander convertisseur de courant électrique alternatif-continu pour une machine électrique tournante synchrone jusqu'à n phases, chaque bit commandant une seule phase (dans l'exemple décrit *n* = 3).

Dans l'exemple de la figure 2A, la mémoire 20 est une mémoire à 8 bits de sortie, dont seuls trois bits de sortie, 200 à 202, sont réellement utilisés.

Sur la figure 2A, on a représenté un circuits 25 constitués par les éléments de commutation de puissance (figure 1 : branches, 1101 à 1103) du convertisseur de courant électrique alternatif-continu réversible (figure 1 : 11), désormais référencés 250*H* à 252*H*, pour les éléments de commutation de puissance dits "hauts", et 250*B* à 252*B*, pour éléments de commutation de puissance dits "bas". Chaque branche de commutateurs, haut et bas respectivement, est commandée de façon connue en soi par une série de circuits 24, dits "pilotes" ou "drivers" selon la terminologie anglo-saxonne couramment utilisée, en l'occurrence trois, 240 à 242. Chaque driver, 240 à 242, comporte donc deux entrées, correspondant aux commutateurs hauts et bas respectivement.

Dans un mode de fonctionnement dit "plein onde", chaque bit de sortie ou signal binaire, 200 à 202, de la mémoire 20, commande une des branches, en d'autres termes une des phases. De façon plu précise, chaque bit, 200 à 202, commande les deux éléments de commutation de puissance, bas et haut, mais de façon inversée. Pour ce faire, on prévoit des circuits supplémentaires 23 constitués de n inverseurs ou circuits logiques "NOT" selon la terminologie anglo-saxonne, trois en l'occurrence pour du triphasé, 230 à 231. Les bits directs et leurs inverses sont transmis aux premières et secondes entrées des drivers, 240 à 242, respectivement. A titre d'exemple, le bit 200 et son inverse commandent, via le driver 240, les éléments de commutation de puissance haut et bas, 250*H* et 250*B*, respectivement de la banche qui correspond à l'une des phases, que l'on appellera par exemple "phase 1" de façon arbitraire.

Comme il a été rappelé, la mise en oeuvre de la table 20, avantageusement une mémoire "R.O.M.", permet une grande souplesse d'adaptation, puisque chaque bit est dédié à la commande d'une phase. On peut donc, sans modifier la structure de la carte électronique sur laquelle sont implémenter les composants du dispositif de commande selon l'invention, pouvoir s'adapter à diverses machines électriques tournantes, ce jusqu'à *n* phases (*n* = 8 dans le cas de l'exemple décrit).

Dans certaines circonstances de fonctionnement (par exemple, du fait du bruit ou instabilité haute fréquence de la boucle), il peut apparaître des fluctuations intempestives de la valeur de la position angulaire calculée préjudiciables au bon fonctionnement du convertisseur 11 de courant électrique alternatif-continu réversible, voire susceptibles d'occasionner la détérioration éléments de commutation de puissance constitués si ceux-ci sont commandés à des instants inappropriés (signaux de commande incorrectement déphasés, produisant par exemple des courts-circuits).

Aussi, dans un mode de réalisation préféré, on applique à cette position angulaire un filtrage du type dit "hystérésique" (module 22) avant de la transmettre à la mémoire 20. On obtient sur la sortie filtrée du système hystérésique 22 un signal représentant pour adresser les positions de la mémoire 20.

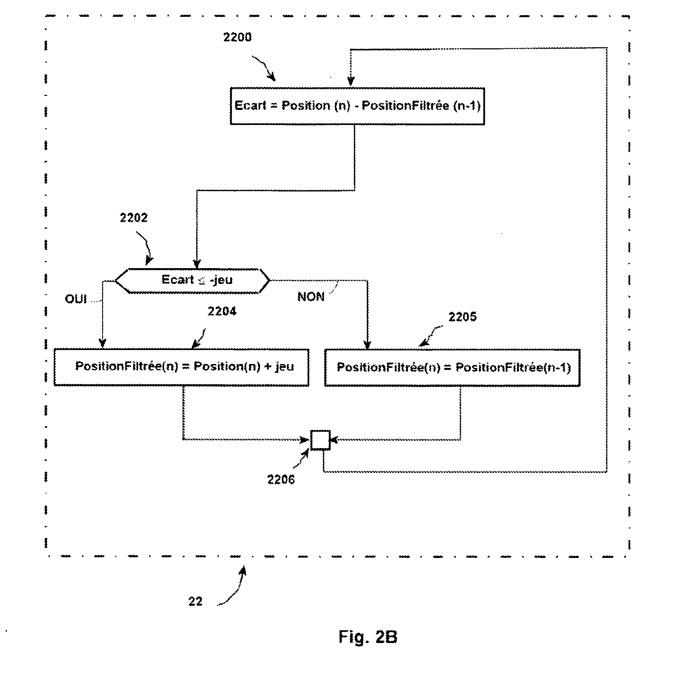

La figure 2B est un bloc diagramme illustrant un exemple de réalisation d'un système de filtrage hystérésique 22 pouvant être mis en oeuvre dans le dispositif 2 de la figure 2A.

Le système de filtrage hystérésique fonctionne, par analogie, comme un jeu mécanique dans un engrenage : lors d'un changement de sens de vitesse, un pignon mené ne voit sa position reculer que lorsque le jeu éventuel entre les dents a été rattrapé, c'est-à-dire lorsque le changement de sens de vitesse a occasionné un déplacement du pignon meneur égal au jeu. Il est possible de reproduire ce comportement en implémentant les itérations décrites par le bloc diagramme de la figure 2B. On appellera ci-après "jeu" la valeur de ce jeu, valeur qui dépend d'un certain nombre de paramètres physiques liés aux organes mis en oeuvre un système réel 1 de la figure 1.

Dans le bloc 2200, on calcule la valeur de l'écart, soit "Ecart", entre la position filtrée à l'étape (n-1), soit "PositionFiltrée(n-1)", et la position à l'étape n, soit "Position(n)", n étant un nombre entier arbitraire. Dans le bloc 2202, on compare la valeur "Ecart" à la valeur "-jeu". Si le résultat de la comparaison est inférieur ou égal à "-jeu" (branche "OUI"), on transmet la valeur "Ecart" au bloc 2204, dans le cas contraire (branche "NON"), on la transmet au bloc 2205. Dans le bloc 2204, on force la valeur "PositionFiltrée(n)", à la valeur "Position(n) + jeu". Dans le bloc 2205, on force la valeur "PositionFiltrée(n)", à la valeur "PositionFiltrée(n-1)". Les sorties des blocs 2204 et 2205 sont additionnées dans un bloc 2206 et la sortie de ce bloc 2206 est rebouclée sur l'entrée du bloc 2200 pour réaliser une nouvelle itération (étape n+1).

Le système de filtrage hystérésique 22 conforme au bloc diagramme de la figure 2B permet d'appréhender un fonctionnement d'une machine électrique susceptible de tourner dans les deux sens, c'est le cas de alterno-démareur 10 de la figure 1.

Dans le cas où le sens de commande de la machine électrique tournante ne peut être qu'unidirectionnel, il suffit de retenir une valeur "jeu" infinie, afin de ne transmettre la position que lorsqu'elle croît (dispositif de type anti-retour équivalent à celui d'une roue dite "à rochet" en mécanique).

Le dispositif de commande de la figure 2A permet d'obtenir un mode de fonctionnement du convertisseur de courant électrique alternatif-continu réversible (figure 1 : 11) en mode dit "pleine onde". Le diagramme de la figure 3 illustre, par la courbe référencée *C*₁₈₀ ce mode de fonctionnement. L'alternance positive représente la tension fournie par un des éléments de commutation de puissance d'une branche, par exemple l'élément haut 250*H*, l'alternance négative la tension fournie par l'élément bas 250B. Il s'agit ici de demi-périodes pleines et consécutives, d'où l'indice "180" utilisé. Naturellement, les paires de signaux de commande, *SC*₁-*SC*₂ à *SC*₅-*SC*₆ (figure 1), issus des bits, 200 à 202, doivent être déphasés à 120° dans le cas considéré (courant triphasé).

Si le mode de fonctionnement "pleine onde" n'est pas approprié, il est possible de modifier la configuration des tables (mémoires "R.O.M.").

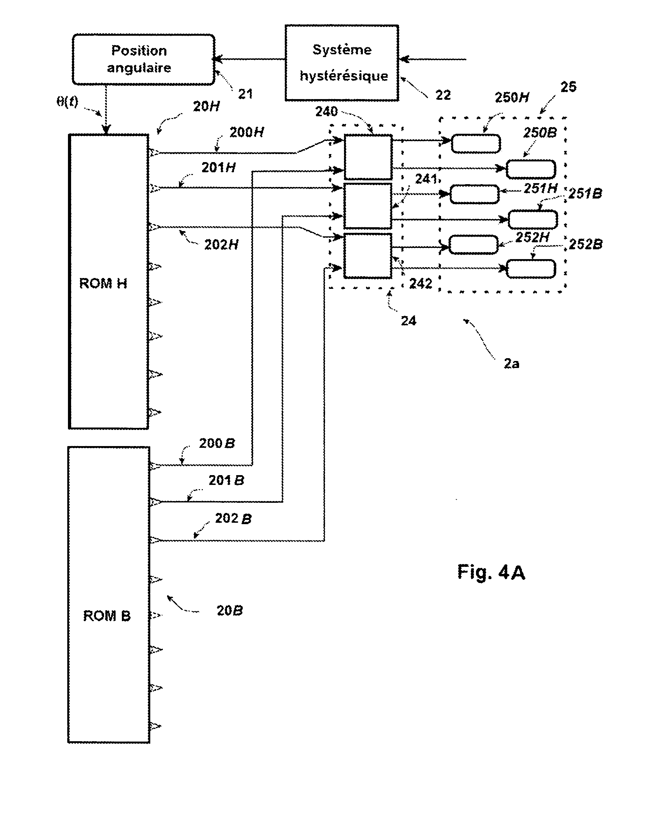

La figure 4A illustre un premier exemple de dispositif de commande modifié 2a mettant en oeuvre deux mémoires "R.O.M.", référencées 20*H* et 20B, pour "Haut" et "Bas". Les deux tables, 20*H* et 20*B*, sont adressées par un même signal numérique représentant la position angulaire θ(*t*) du rotor 101 (figure 1). Cette configuration permet de commander séparément les éléments de commutation de puissance, respectivement haut et bas, de chaque branche, 1101 à 1103, par l'une des tables, 20*H* ou 20*B*. Ainsi, la phase peut rester flottante pendant un intervalle de temps donné. Les bits 200*H* à 202*H* générés par la mémoire 20*H* sont destinés à commander les éléments de commutation de puissance hauts de chaque branche, donc de chaque phase, et les bits 200B à 202B les éléments de commutation de puissance bas. Ces deux séries de bits sont transmises directement aux deux séries d'entrées correspondantes des drivers 240 à 241.

Pour fixer les idées, la courbe *C*₁₂₀ de la figure 3 illustre un exemple de mode de fonctionnement différent du mode dit "pleine onde". Dans l'exemple illustré par cette courbe *C*₁₂₀, les éléments de commutation de puissance hauts et bas, par exemple 250*H* et 250*B*, ne conduisent que pendant 120° sur 180° d'une alternance.

Les autres composants du dispositif 2a de la figure 4A sont identiques à ceux du dispositif 2 de la figure 2, et il n'est pas utile de les re-décrire.

Comme précédemment, on peut mettre en oeuvre un filtre hystérésique 22 en tant que de besoin (décrit de façon détaillé en regard de la figure 2A).

Bien entendu les tables constituées par les mémoires, 20*H* et 20*B*, doivent être codées de manière à éviter de commander les deux éléments de commutation de puissance séparément même s'il est préférable de bloquer ce fonctionnement interdit directement au niveau des drivers, 240 à 242, des éléments de commutation de puissance 25.

Cette configuration, présente cependant l'inconvénient de nécessiter la présence de deux mémoires, bien que ces mémoires peuvent être identiques en ce qui concerne leur configuration matérielle (brochage).

Il est toutefois possible de n'utiliser qu'une seule mémoire, comme le montre la figure 4B qui illustre un deuxième exemple de dispositif de commande modifié. Selon ce mode de réalisation, on n'utilise qu'une seule table constituée par une mémoire "R.O.M." unique 20*HB*. On utilise dans ce cas un plus grand nombre de bits de sortie de la mémoire 20*HB*, précisément le double, à nombre de phases commandées identique. De façon corrélative, les possibilités d'extension, à nombre de broches constant en sont d'autant limitées.

Les bits 200*H* à 202*H*, d'une part, et les bits, 200*B* à 202*B*, d'autre part, jouent un rôle identique à celui des bits correspondants du dispositif 2b de la figure 4A. Il suffit de coder en conséquence la mémoire 20*HB* et d'y stocker les mots nécessaires pour obtenir ce résultat. Les autres composants du dispositif 2b fonctionnent de façon identique que ceux du dispositif 2a. Il est donc inutile de les re-décrire.

Comme précédemment, on peut mettre en oeuvre un filtre hystérésique 22 en tant que de besoin (décrit de façon détaillé en regard de la figure 2A).

Il est enfin possible de commander les éléments de commutation de puissance 25 du convertisseur de courant électrique alternatif-continu réversible 11 (figure 1) en faisant appel à une modulation de largeur d'impulsion ("MLI" ou "PWM" pour "Pulse Width Modulation selon la dénomination anglo-saxonne couramment utilisée).

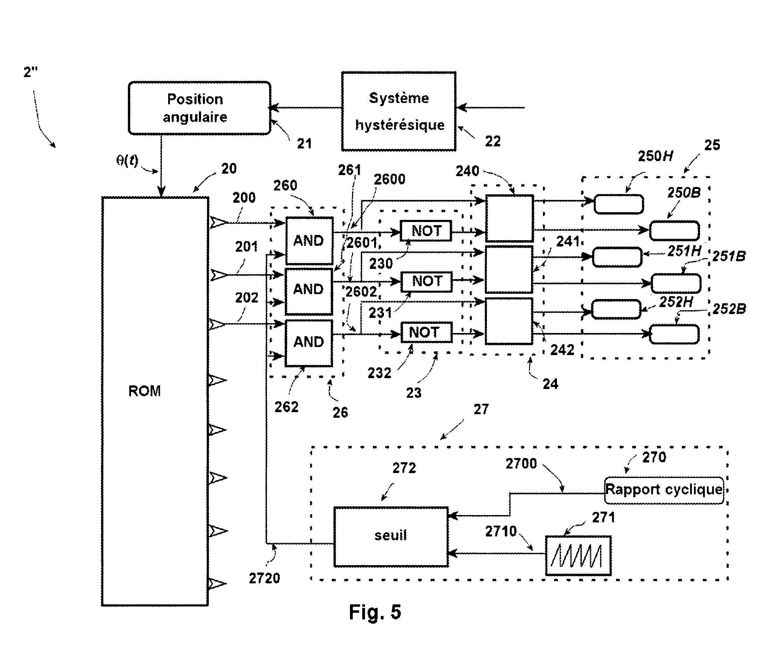

La figure 5 illustre un exemple de dispositif de commande 2" selon l'invention de ce type.

La structure du dispositif de commande 2" est similaire à celle du dispositif de commande 2 de la figure 2, en ce sens qu'il est mis en oeuvre une mémoire unique 20 et une série 23 de circuits logiques "NOT", 230 à 232. Cependant, une série 26 de circuits logiques "ET", 260 à 262, ou "AND" selon la terminologie anglo-saxonne couramment utilisée, est intercalée entre la mémoire unique 20 et la série 23 de circuits logiques "NOT" et la série 24 de drivers. Les circuits logiques "AND", 260 à 262, reçoivent les bits de sortie, 200 à 202, de la mémoire 20 sur une première entrée.

De façon analogue au dispositif 2 de la figure 2, les bits de sortie, 2600 à 2602, des circuits "AND", 260 à 260, commandent chacun les éléments de commutation de puissance haut et bas d'une des branches de commutateurs, donc d'une phase. Ils sont transmis directement à une première entrée des drivers, 240 à 242, d'une part, et sous forme inversée, à un seconde entrée de ces mêmes drivers, 240 à 242, d'autre part.

Les secondes entrées des circuits logiques "AND", 260 à 262, reçoivent d'un module 27 un même signal de commande 2720 généré par un circuit de seuil 272. De façon bien connu en soit, ce circuit 272 reçoit, sur une première entrée, un signal de commande de rapport cyclique 2700, ajustable à volonté, généré par un circuit 270, et sur une seconde entrée, un signal en dent de scie 2710 généré par des circuits d'horloge 271 de fréquence élevée. En fonction de la durée du signal de commande de rapport cyclique 2700, les circuits "AND" laissent passer les valeurs logiques des bits de commandes, 200 à 202, présents sur les sorties de la mémoire 20, pendant des fractions plus ou moins longues de chaque demi-alternance (entre 0° et 180°), lorsque le signal 2700 est à un premier état logique, par exemple au "1" logique, et les bloquent lorsqu'il est au second état logique, "0" logique. Les impulsions de commande, 2600 à 2602, des éléments de commutation de puissance, sont donc bien modulées en longueur d'impulsion ("MLI" ou "PWM").

Comme précédemment, on peut mettre en oeuvre un filtre hystérésique 22 en tant que de besoin (décrit de façon détaillé en regard de la figure 2A).

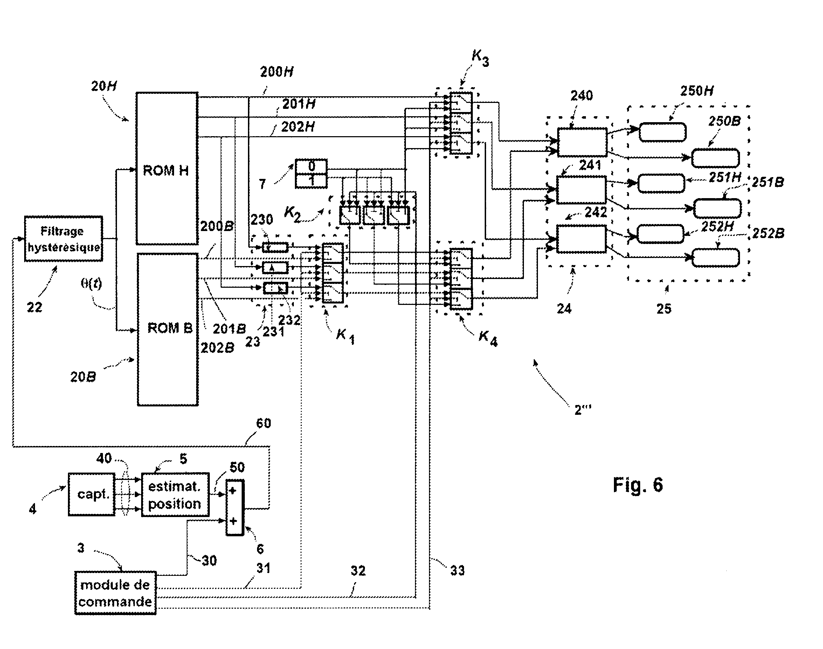

On va maintenant décrire un exemple de réalisation pratique d'un dispositif commande complet 2"' selon l'invention par référence à la figure 6. le dispositif de commande 2"' autorise divers modes de fonctionnement.

En premier lieu, l'agencement de la figure 6 permet de fonctionner, ou non, en mode dit "pleine onde". Il est aussi pourvu de fonctions supplémentaires qui seront détaillées ci-après.

Pour ce faire, il comprend, conformément à une des caractéristiques essentielles de l'invention, des tables constituées de mémoires "R.O.M.", adressables par la valeur numérique de la position angulaire du rotor 101 (figure 1). De façon plus précise, le dispositif 2"' est pourvu de deux mémoires, 20*H* et 20*B*, jouant un rôle similaire aux mémoires de mêmes références de la figure 4A lorsqu'elles sont utilisées simultanément.

Le dispositif 2"' comprend, comme précédemment une série d'éléments de commutation de puissance 25 et de drivers 24 de ces éléments de commutation de puissance. Il est inutile de les re-décrire.

Comme précédemment également, on peut mettre en oeuvre un filtre hystérésique 22 en tant que de besoin (décrit de façon détaillé en regard de la figure 2A).

On a aussi représenté sur la figure 6 un module 4 comprenant les capteurs *CA*₁ à *CA*₃ de la figure 1 et délivrant sur ses sorties (référence unique 40) les signaux générés par ces capteurs, trois en l'occurrence pour une machine triphasée, *n* dans le cas général. Les signaux 40 sont transmis à un module 5 d'estimation de position angulaire du rotor 101 : signal numérique de sortie 50. Le module 5 joue un rôle analogue au module 12 de la figure 1, le signal de sortie 50 étant estimé à partir de combinaisons linéaires des signaux 40, comme il a été rappelé.

Le dispositif 2"' comprend en outre un module de commande de fonctions 3 délivrant quatre signaux de commande distincts en sortie, dans l'exemple décrit, 30 à 33.

Le premier signal de commande, 30, est un signal de commande d'avance de phase. Il est transmis sur une seconde entrée d'un additionneur numérique 6 recevant sur sa première entrée le signal numérique estimé 50 de position angulaire du rotor 101. En fonction de la valeur numérique du signal 30, la position angulaire estimée du rotor 50 va être modifiée, ce qui reviendra à modifier la phase des signaux de commande des éléments de commutation de puissance 25.

Le signal de sortie 60 de l'additionneur 6 est transmis au module de filtrage hystérique 22, qui délivre en sortie une valeur numérique filtrée θ(*t*) de position angulaire de rotor éventuellement modifiée par le signal de commande d'avance de phase 30. Cette valeur θ(*t*) est utilisée pour adresser les mémoires 20*H* et 20*B.*

Le dispositif 2"' comprend enfin quatre bancs de trois commutateurs, référencés *K*₁ à *K*₄, fonctionnant comme un aiguillage deux voies, dont l'utilité va être explicitée ci-après.

Tout d'abords, bien que représentés sous la forme de commutateurs galvaniques, on doit bien comprendre qu'il peut s'agir de commutateurs de technologie quelconque, notamment de commutateurs électroniques.

Les commutateurs des bancs *K*₃ et *K*₄ sont commandés par un signal binaire 33 en provenance du module de commande de fonctions 3. Ce signal a pour fonction de permettre l'arrêt ou le blocage des bits de commande générés par les mémoires 20*H* et 20*B* : fonction "MARCHE/ARRET" ou "ON/OFF" selon la terminologie anglo-saxonne couramment utilisée. Lorsque le signal 33 est à l'état logique arbitraire "1 ", la voie supérieure des commutateurs *K*₃ et *K*₄ est passante. Lorsque le signal 33 est à logique "0", la voie inférieure des commutateurs *K*₃ et *K*₄ est passante.

Les commutateurs du banc *K*₁ reçoivent un signal de commande binaire 31 en provenance du module de commande de fonctions 3. La valeur logique, "1" ou "0", du signal 31 détermine si le dispositif 2"' doit fonctionner en mode dit "pleine onde" ou non. Les commutateurs du banc *K*₁ permettent donc de sélectionner l'un ou l'autre de ces deux modes de fonctionnement.

Dans le premier cas, la voie supérieure des commutateurs *K*₁ est passante et seuls les bits de sortie, 200*H* à 202*H*, de la mémoire 20*H*, sont pris en compte. En effet, les bits, 200*H* à 202*H*, sont transmis directement, d'une part, aux premières entrées des drivers, 240 à 242, via les voies supérieures passantes des commutateurs *K*₁, et, d'autre part, sous forme inversée, par l'action des circuits "NOT", 230 à 232, aux secondes entrées de ces mêmes drivers, 240 à 242, via les voies supérieures passantes des commutateurs *K*₄. Dans cette hypothèse, le fonctionnement est donc tout à fait similaire à celui du dispositif de la figure 2.

Dans le second cas, la voie inférieure des commutateurs *K*₁ est passante. Il s'ensuit que les bits de sortie, 200*H* à 202*H*, de la mémoire 20*H* sont transmis aux premières entrées des drivers, 240 à 242, via les voies supérieures passantes des commutateurs *K*₃, et les bits, 200*B* à 202*B*, de la mémoire 20B sont transmis aux secondes entrées des drivers, 240 à 242, via les voies inférieures passantes des commutateurs *K*₁ et supérieures des commutateurs *K*₄. Le fonctionnement est alors tout à fait similaire à celui obtenu avec le dispositif 2a de la figure 4A. Il serait naturellement possible, dans une variante de réalisation supplémentaire de remplacer les deux mémoires 20*H* et 20*B* par une mémoire unique, comme dans le cas du dispositif 2b de la figure 4B.

Il est enfin possible de faire forcer le convertisseur de courant électrique alternatif-continu réversible 11 (figure 1), lorsqu'il fonctionne comme générateur de courant (mode de fonctionnement alternateur), dans un mode de court-circuit des bobinages de phases du stator de l'alterno-démarreur 10 (figure 1), de façon plus générale, des bobinages de phases du stator de la machine électrique tournante synchrone. Ce mode de court-circuit présente un intérêt notamment pour un freinage d'un moteur thermique lors de l'arrêt de celui-ci.

Le mode de court-circuit est commandé à travers les signaux binaires 32 et 33 commandant les commutateurs *K*₂, *K*₃ et *K*₄.

L'agencement du circuit des commutateurs *K*₂, *K*₃ et *K*₄ est tel que lorsque le signal 33 est à l'état logique « 1 », les mémoires 20H et 20B sont opérantes et définissent la commande des commutateurs de puissance du convertisseur.

Lorsque le signal 33 est à l'état logique "0", c'est l'état logique du signal 32 qui force l'état de commutateurs de puissance à un état « ouvert » ou « fermé ». Le signal 33 étant à l'état logique "0", si le signal 32 est à l'état logique "0", les commutateurs de puissance sont ouverts et les bobinages du stator sont alors dans un état de déconnexion. Le signal 33 étant à l'état logique "0", si le signal 32 est à l'état logique "1", les commutateurs de puissance sont ouverts et les bobinages du stator sont alors dans un état de court-circuit.

A la lecture de ce qui précède, on constate aisément que l'invention atteint bien les buts qu'elles s'est fixée, et qu'il est inutile de rappeler entièrement.

Toutefois, l'invention n'est pas limitée aux seul dispositifs conformes aux modes de réalisation explicitement décrits en regard des figures 2 à 6, ni seulement à l'application préférée relative à la commande convertisseur 11 de courant électrique alternatif-continu réversible associé à un alterno-démarreur triphasé.

Sans sortir du cadre de l'invention, le dispositif s'applique à toute machine tournante polyphasée, par exemple biphasée, triphasée, hexaphasée, etc., en mode moteur (démarreur) et/ou alternateur (générateur de courant), ce que permet précisément l'utilisation de tables numériques adressées par la valeur numérique de la position angulaire de rotor, selon une des caractéristiques essentielles de l'invention. Ces tables ont avantageusement réalisées à base de mémoires fixes, de type "R.O.M.", mais pourraient tout aussi bien être réalisées à base de mémoires reprogrammables du type "P.R.O.M" (pour "Programmable Read Only Memory") ou similaires.

Enfin, il doit être clair que les valeurs numériques n'ont été données que pour mieux mettre en évidence les caractéristiques de l'invention et ne sauraient en limiter en quoi que ce soit sa portée. Elles dépendent notamment de l'application précise envisagée et leur choix reste à la portée de l'Homme de Métier.

## Revendications

1. Dispositif de commande d'un convertisseur de courant électrique alternatif-continu associé à une machine électrique tournante synchrone polyphasée comprenant un rotor et un stator comprenant une pluralité d'enroulements connectés entre eux en leurs extrémités, en nombre égal aux nombre de phases, ledit convertisseur de courant électrique alternatif-continu étant disposé entre ladite machine électrique tournante synchrone polyphasée et une unité de stockage d'énergie électrique continue comportant des bornes dites positive et négative, ledit convertisseur de courant électrique alternatif-continu comprenant, pour chaque phase, une branche de deux commutateurs de puissance en série, dits haut et bas, disposée entre lesdites bornes positive et négative, le point milieu entre deux commutateurs de puissance, haut et bas, constituant des entrées et/ou des sorties dudit convertisseur de courant électrique alternatif-continu et étant reliés aux dites extrémités de connexions desdits enroulements, le dispositif de commande comprenant des moyens de génération d'un signal de sortie représentant la position angulaire dudit rotor, **caractérisé en ce qu'**il comprend au moins une table numérique (20) comprenant une pluralité d'emplacements de mémoire stockant des mots numériques adressées par ledit signal de position angulaire de rotor (θ(*t*)) et délivrant sur sa sortie des signaux binaires de commande (200 - 202) en nombre égal au nombre desdites phases, chaque signal binaire de commande (200 - 202) commandant la commutation desdits commutateurs de puissance, hauts et bas (250*H* à 252*B*), selon une séquence temporelle prédéterminée fonction de la valeur instantanée dudit signal de position angulaire de rotor (θ(*t*)) adressant lesdites tables numériques (20).

2. Dispositif de commande selon la revendication 1, **caractérisé en ce qu'**il comprend une table numérique unique (20) adressée par ledit signal de position angulaire de rotor (θ(*t*)) et une pluralité de circuits logiques inverseurs (230 - 232), en nombre égal au nombre desdites phases, **en ce que** chacun desdits signaux binaires de commande (200 - 202), dit direct, est transmis, d'une part, à l'entrée de l'un desdits circuits logiques inverseurs (230 - 232) pour générer un signal binaire de commande, dit inverse, et, d'autre part, comme signal de commande de commutation, à l'un des commutateurs de puissance, dit haut (250*H* - 252*H*), d'une desdites branches dudit convertisseur de courant électrique alternatif-continu (11), et **en ce que** ledit signal binaire de commande inverse est transmis comme signal de commande de commutation, au commutateur de puissance, dit bas (250*B* - 252*B*), de cette même branche, de manière à obtenir un mode de fonctionnement dit "pleine onde" (*C*₁₈₀) desdits commutateurs de puissance (250*H* à 252*B*), chacun de ces commutateurs de puissance étant commandé en tout ou rien, en alternance pendant deux demi-périodes entières consécutives.

3. Dispositif de commande selon la revendication 1, **caractérisé en ce qu'**il comprend une première (20*H*) et une seconde (20*B*) tables numériques, adressées toutes deux par ledit signal de position angulaire de rotor (θ(*t*)) et délivrant sur leurs sorties le même nombre de dits signaux binaires de commande (200*H* - 202*B*), associés par paires, **en ce que** chacun desdits signaux binaires de commande (200*H* - 202*B*) délivré par ladite première table numérique (20*H*) est transmis comme signal de commande de commutation à l'un des commutateurs, dit haut (250*H* - 252*H*), d'une desdites branches, **en ce que** ledit signal binaire de commande (200*B* - *202B*) délivré par ladite seconde table numérique (20*B*) qui lui est associé est transmis comme signal de commande de commutation au commutateur de puissance, dit bas (250*B* - 252*B*), de cette même branche, de manière à ce que lesdits commutateurs de puissance (250*H* à 252*B*) soient commandés, en tout ou rien, en alternance pendant une fraction déterminée de demi-périodes consécutives (*C*₁₂₀) en fonction d'un codage particulier desdits mots numériques stockés dans lesdites première et seconde tables numériques et à obtenir un mode de fonctionnement différent dudit mode "pleine onde".

4. Dispositif de commande selon la revendication 1, **caractérisé en ce qu'**il comprend une table numérique unique(20*HB*) adressée par ledit signal de position angulaire de rotor (θ(*t*)), **en ce que** ladite mémoire unique (20*HB*) délivre en sortie des première (200*H* - 202*H*) et seconde (200*B* - 202*B*) séries de signaux binaires de commande en nombre égal au nombre desdites phases et associés par paires, **en ce que** lesdits signaux binaires de commande de chacune desdites paires (200*H* - 202*H*, 200*B* - 202*B*) sont transmis comme signaux de commande de commutation aux dits commutateurs de puissance, dit hauts et bas (250*H* à 252*B*), d'une même branche, de manière à ce que ces dits commutateurs de puissance soient commandés en tout ou rien, en alternance, pendant une fraction déterminée de demi-périodes consécutives (*C*₁₂₀) en fonction d'un codage particulier desdits mots numériques stockés dans ladite table numérique unique et à obtenir un mode de fonctionnement différent dudit mode "pleine onde".

5. Dispositif de commande selon la revendication 1, **caractérisé en ce qu'**il comprend une table numérique unique (20) adressée par ledit signal de position angulaire de rotor (θ(*t*)), une pluralité de circuits logiques "ET" (260 - 262) et de circuits inverseurs (230 - 232), lesdits circuits étant en nombre égal au nombre desdites phases, **en ce que** chacun desdits circuits logiques "ET" (260 - 262) reçoit sur une première entrée un signal de commande (2720) dit de durée d'impulsion à un premier état logique pendant des durées de temps déterminées et sur une seconde entrée un desdits signaux binaires de commande (200 - 202), de façon à générer en sortie un signal de commande binaire, dit direct (2600 - 2602), pendant lesdites durées de temps déterminées, **en ce que** ledit signal de commande direct est transmis, d'une part, à l'entrée de l'un desdits circuits logiques inverseurs (230 - 232) pour générer un signal binaire de commande, dit inverse, et, d'autre part, comme signal de commande de commutation à l'un des commutateurs de puissance, dit haut (250*H* - 252*H*), d'une desdites branches dudit convertisseur de courant électrique alternatif-continu (11), et **en ce que** ledit signal binaire de commande inverse est transmis comme signal de commande de commutation au commutateur de puissance, dit bas (250*B* - 252*B*), de cette même branche, de manière à ce que ces dits commutateurs de puissance (250*H* à 252*B*) soient commandés en tout ou rien, en alternance, pendant des fractions déterminées de demi-périodes consécutives, fonctions desdites durées de temps déterminées imposées par ledit signal de commande de durée d'impulsion (2720) et à obtenir un mode de fonctionnement dit à modulation de durée d'impulsion.

6. Dispositif de commande selon la revendication 5, **caractérisé en ce qu'**il comprend un circuit de génération dudit signal de commande de durée d'impulsion (27) comprenant des circuits d'horloge (271) délivrant des signaux en dents de scie de fréquence déterminée, un circuit de commande (270) délivrant un signal de commande de rapport cyclique (2700) et un circuit de seuil (272) délivrant sur sa sortie ledit signal de commande de durée d'impulsion (2720), à un premier état logique lorsque ledit signal de commande de rapport cyclique (2700) atteint un seuil déterminé et à un second état logique en dessous de ce seuil, et **en ce que** ledit signal de commande de durée d'impulsion (2720) autorise la génération desdits signaux de commande direct par lesdits circuits logiques "ET" (260 - 262) lorsqu'il est au dit premier état logique.

7. Dispositif de commande selon la revendication 1, **caractérisé en ce qu'**il comprend une première (20*H*) et une seconde (20*B*) tables numériques, adressées toutes deux par ledit signal de position angulaire de rotor (θ(*t*)) et délivrant sur leurs sorties le même nombre de signaux binaires de commande (200*H* - 202*H*, 200*B* - 202*B*), en nombre égal au nombre desdites phases et associés par paires, **en ce qu'**il comprend une pluralité de circuits logiques inverseurs (230 - 232) et une pluralité de premiers commutateurs à deux voies (*K*₁), en nombre égal au nombre desdites phases, comprenant chacun deux entrées de signaux, dites supérieure et inférieure, et une entrée de commande pour aiguiller sélectivement lesdits signaux d'entrée vers une sortie unique, **en ce qu'**il comprend une pluralité de circuits logiques inverseurs (230 - 232), en nombre égal au nombre desdites phases, **en ce que** chacun desdits signaux binaires de commande, dit direct, est transmis, d'une part, à l'entrée de l'un desdits circuits logiques inverseurs (230 - 232) pour générer un signal binaire de commande, dit inverse, et, d'autre part, comme signal de commande de commutation, à l'un des commutateurs de puissance, dit haut (250*H* - 252*H*), d'une desdites branches dudit convertisseur de courant électrique alternatif-continu (11), **en ce que** chacun desdits signaux de commande binaires inverses est transmis à ladite entrée supérieure d'un desdits premiers commutateurs à deux voies (*K*₁) et chacun des signaux binaire de commande délivré par la seconde table numérique (20*B*) est transmis à l'entrée dite inférieure du même premier commutateur à deux voies (*K*₁), et **en ce qu'**il comprend des moyens de commande de fonction (3) pour la génération d'un signal commande de mode de fonctionnement (31) transmis aux dites entrées de commande desdits premiers commutateurs à deux voies (*K*₁) pour aiguiller en sortie, lorsque ledit signal de commande de mode de fonctionnement est dans un premier état logique, lesdits signaux binaires de commande inverses comme signaux de commande de commutation desdits commutateurs de puissance bas (250*B* - 252*B*), de manière à obtenir ledit mode de fonctionnement "pleine onde" desdits commutateurs de puissance (250*H* à 252*B*), chacun de ces commutateurs de puissance étant commandé en tout ou rien, en alternance pendant deux demi-périodes entières consécutives (*C*₁₈₀), et, lorsque ledit signal de commande de mode de fonctionnement est dans un second état logique, lesdits signaux binaires de commande délivrés par la seconde table numérique (20*B*), comme signaux de commande de commutation desdits commutateurs de puissance bas (250*B* à 252*B*), de manière à ce que lesdits commutateurs de puissance, hauts et bas (250*H* à 252*B*), soient commandés, en tout ou rien, en alternance pendant une fraction déterminée de demi-périodes consécutives (*C*₁₂₀) en fonction d'un codage particulier desdits mots numériques stockés dans lesdites première et seconde tables numériques et à obtenir un mode de fonctionnement différent dudit mode de fonctionnement "pleine onde".

8. Dispositif de commande selon la revendication 7, **caractérisé en ce qu'**il comprend une pluralité de deuxièmes (*K*₃) et une pluralité de troisièmes (*K*₄) commutateurs à deux voies, en nombre égal au nombre desdites phases, comprenant chacun deux entrées de signaux, dites supérieure et inférieure, et une entrée de commande pour aiguiller sélectivement lesdits signaux d'entrée vers une sortie unique, **en ce que** lesdits deuxièmes commutateurs à deux voies (*K*₃) reçoivent chacun sur leur entrée dite supérieure un desdits signaux binaires de commande (200*H* - 202*H*) délivrés par ladite première table numérique (20*H*), **en ce que** lesdits troisièmes commutateurs à deux voies (*K*₄) reçoivent chacun sur leur entrée dite supérieure un desdits signaux binaires de commande présents sur les sorties desdits premiers commutateurs à deux voies (*K*₁), et **en ce que** lesdits moyens de moyens de commande de fonction (3) génèrent en sortie un signal binaire supplémentaire (33) prenant deux états logiques, dits "MARCHE/ARRÊT", respectivement, autorisant la transmission aux dits commutateurs de puissance, hauts et bas (250*H* à 252*B*), des signaux binaires de commande (200*H* - 202*H*) délivrés par ladite première table numérique (20*H*) et présents sur les sorties desdits premiers commutateurs à deux voies (*K*₁), lorsqu'il est au dit premier état, et les bloquant lorsqu'il est au dit second état.

9. Dispositif de commande selon la revendication 8, **caractérisé en ce qu'**il comprend des moyens de mémorisation à deux positions binaires (7), dits états logiques "1" et "0", **en ce qu'**il comprend une pluralité de quatrièmes commutateurs à deux voies (*K*₂), en nombre égal au nombre desdites phases, comprenant deux entrées de signaux, dites supérieure et inférieure, et une entrée de commande pour aiguiller sélectivement lesdits signaux d'entrée vers une sortie unique, lesdits moyens de mémorisation à deux positions binaires (7) et ladite pluralité de quatrièmes commutateurs à deux voies (*K*₂) autorisant, en fonction d'états logiques de signaux dédiés de commande de mode (32, 33), un mode de court-circuit de bobinages de stator ou un mode de déconnexion desdits bobinages de stator.

10. Dispositif de commande selon la revendication 7, **caractérisé en ce qu'**il comprend des moyens (6) de modification de la phase dudit signal de position angulaire de rotor (θ(*t*)), **en ce que** lesdits moyens de commande de fonction (3) génère un signal supplémentaire (30) dit d'avance de phase, **en ce que** lesdits moyens de modification de phase (6) reçoivent sur une première entrée ledit signal d'avance de phase (30) et sur une seconde entrée le signal de sortie (50) desdits moyens de génération (5) d'un signal représentant la position angulaire dudit rotor, de manière à générer sur leur sortie un signal de position angulaire de rotor (60) dont la phase est modifiée en fonction de la valeur dudit signal d'avance de phase (30).

11. Dispositif de commande selon la revendication 10, **caractérisé en ce que** ledit signal d'avance de phase (30) et ledit signal position angulaire de rotor (50) étant numériques, lesdits moyens de modification de phase consistent en un additionneur numérique (6) à deux entrés auxquelles sont transmis lesdits signaux (30, 50).

12. Dispositif de commande selon l'une quelconque des revendications précédentes, **caractérisé en ce que** la sortie desdits moyens de génération d'un signal représentant la position angulaire dudit rotor est connectée à l'entrée de moyens de filtrage hystérésiques (22) et **en ce que** la sortie de ces dits moyens de filtrage hystérésiques génère un signal représentant la position angulaire de rotor filtrée (θ(*t*)) utilisé pour adresser lesdites tables numériques.

13. Dispositif de commande selon l'une quelconque des revendications précédentes, **caractérisé en ce que** lesdites tables numériques (20) sont des mémoires à lecture seule du type dit "R.O.M.", comprenant un nombre déterminé de sortie délivrant les dits signaux binaires de commande.

14. Dispositif de commande selon la revendication 13, **caractérisé en ce que** lesdites mémoires (20) comportent huit sorties délivrant des signaux binaires de commande.

15. Dispositif de commande selon l'une quelconque des revendications précédentes, **caractérisé en ce que** ladite machine électrique tournante synchrone polyphasée est un alterno-démarreur (10).

16. Dispositif de commande selon la revendication 15, **caractérisé en ce que** ledit convertisseur de courant électrique alternatif-continu est un convertisseur de courant électrique alternatif-continu réversible (11).

17. Dispositif de commande selon l'une quelconque des revendications précédentes, **caractérisé en ce que** lesdits commutateurs de puissance dudit convertisseur de courant électrique alternatif-continu sont des transistors MOS-FET de puissance (110).

18. Dispositif de commande selon l'une quelconque des revendications précédentes, **caractérisé en ce que** ladite machine électrique tournante synchrone polyphasée (10) est une machine triphasée.

19. Machine électrique tournante polyphasée (10) comprenant un rotor (100) et un stator (104) **caractérisée en ce qu'**elle comprend un dispositif de commande d'un convertisseur de courant électrique alternatif-continu (11) associé à une telle machine électrique tournante synchrone polyphasée selon l'une quelconque des revendications précédentes.

## Claims

1. Control device for an AC-DC current converter associated with a polyphase synchronous rotary electrical machine containing a rotor and a stator containing a plurality of windings connected together at their extremities, equal in number to the number of phases, said AC-DC current converter being disposed between said polyphase synchronous rotary electrical machine and a DC electrical energy storage unit including positive and negative terminals, said AC-DC current converter containing, for each phase, a branch of two power switches in series, known as high and low, disposed between said positive and negative terminals, the midpoint between two power switches, high and low, constituting the inputs and/or the outputs of said AC-DC current converter and being connected to said extremities of the connections of said windings, the control device containing means of generating an output signal representing the angular position of said rotor, **characterised in that** it contains at least one digital table (20) containing a plurality of storage locations storing the digital words addressed by said signal of the angular position of the rotor (θ(*t*)) and delivering at its output binary control signals (200 - 202) equal in number to the number of said phases, each binary control signal (200 - 202) controlling the switching of said high and low power switches (250*H* to 252*B*), according to a timing sequence predetermined depending on the instantaneous value of said signal of the angular position of the rotor (θ(*t*)) addressing said digital tables (20).

2. Control device according to claim 1, **characterised in that** it contains a single digital table (20) addressed by said signal of the angular position of the rotor (θ(*t*)) and a plurality of inverter logic gates (230 - 232), equal in number to the number of said phases, **in that** each of said binary control signals (200 - 202), known as direct, is sent, firstly, to the input of one of said inverter logic gates (230 - 232) to generate a binary control signal, known as inverse, and, secondly, as switching control signal, to one of the power switches, known as high (250*H* - 252*H*), of one of said branches of said AC-DC current converter (11), and **in that** said inverse binary control signal is sent as switching control signal to the power switch known as low (250*B* - 252*B*), of this same branch, so as to obtain a mode of function called "full wave" (C₁₈₀) of said power switches (250*H* to 252B), each of these power switches being controlled as all or nothing, alternating during two full consecutive half-periods.

3. Control device according to claim 1, **characterised in that** it contains first (20*H*) and second (20*B*) digital tables, both addressed by said signal of the angular position of the rotor (θ(*t*)) and delivering at their outputs the same number of said binary control signals (200*H* - 202*B*), associated in pairs, **in that** each of said binary control signals (200*H* - 202*B*) delivered by said first digital table (20*H*) is sent as switching control signal to one of the switches, known as high (250*H* - 252*H*), of one of said branches, **in that** said binary control signal (200*B* - 202*B*) delivered by said second digital table (20*B*) associated with it is sent as switching control signal to the power switch, known as low (250*B* - 252*B*), of this same branch, such that said power switches (250*H* to 252*B*) are controlled, as all or nothing, alternately during a fixed fraction of consecutive half-periods (*C*₁₂₀) depending on a particular coding of said digital words stored in said first and second digital tables and to obtain a different mode of function from said "full wave" mode.

4. Control device according to claim 1, **characterised in that** it contains a single digital table (20*HB*) addressed by said signal of the angular position of the rotor (θ(*t*)), **in that** said single memory (20*HB*) delivers as output first (200*H* - 202*H*) and second (200*B* - 202*B*) series of binary control signals equal in number to the number of said phases and associated in pairs, **in that** said binary control signals of each of said pairs (200*H* - 202*H*, *200B -* 202*B*) are sent as switching control signals to said power switches, known as high and low (250*H* to 252*B*), of the same branch, such that said power switches are controlled as all or nothing, alternately, during a fixed fraction of consecutive half-periods (C₁₂₀) depending on a particular coding of said digital words stored in said single digital table and to obtain a different mode of function from said "full wave" mode.

5. Control device according to claim 1, **characterised in that** it contains a single digital table (20) addressed by said signal of the angular position of the rotor (θ(*t*)), a plurality of "AND" logic gates (260 - 262) and of inverter gates (230 - 232), said gates being equal in number to the number of said phases, **in that** each of said "AND" logic gates (260 - 262) receives at a first input a control signal (2720) known as pulse width in a first logic state during fixed periods of time and at a second input one of said binary control signals (200 - 202), so as to generate as output a binary control signal, known as direct (2600 - 2602), during said fixed periods of time, **in that** said direct control signal is sent, on the one hand, to the input of one of said inverter logic gates (230 - 232) to generate a binary control signal, known as inverse, and, on the other hand, as switching control signal to one of the power switches, known as high (250*H* - 252*H*), of one of said branches of said AC-DC current converter (11), and **in that** said inverse binary control signal is sent as switching control signal to the power switch, known as low (250*B* - 252*B*), of this same branch, such that said power switches (250*H* to 252*B*) are controlled as all or nothing, alternately, during fixed fractions of consecutive half-periods, functions of said fixed periods of time being imposed by said pulse width control signal (2720) and to obtain a mode of function known as pulse width modulation.

6. Control device according to claim 5, **characterised in that** it includes a circuit to generate said pulse width control signal (27) containing clock circuits (271) delivering saw tooth signals of a fixed frequency, a control circuit (270) delivering a cyclical ratio control signal (2700) and a threshold circuit (272) delivering at its output said pulse width control signal (2720), in a first logic state when said cyclical ratio control signal (2700) attains a fixed threshold and in a second logic state below this threshold, and **in that** said pulse width control signal (2720) authorises the generation of said direct control signals by said "AND" logic gates (260 - 262) when it is in said first logic state.

7. Control device according to claim 1, **characterised in that** it contains first (20*H*) and second (20*B*) digital tables, both addressed by said signal of the angular position of the rotor (θ(*t*)) and delivering at their outputs the same number of binary control signals (200*H* - 202*H*, 200*B* - 202*B*), equal in number to the number of said phases and associated in pairs, **in that** it contains a plurality of inverter logic gates (230 - 232) and a plurality of first two-pole relays (*K*₁), equal in number to the number of said phases, each containing two signal inputs, known as upper and lower, and a control input to selectively route said input signals to a single output, **in that** it includes a plurality of inverter logic gates (230 - 232), equal in number to the number of said phases, **in that** each of said binary control signals, known as direct, is sent, firstly, to the input of one of said inverter logic gates (230 - 232) to generate a binary control signal, known as inverse, and, secondly, as switching control signal, to one of the power switches, known as high (250*H* - 252*H*), of one of said branches of said AC-DC current converter (11), **in that** each of said inverse binary control signals is sent to said upper input of one of said first two-pole relays (*K*₁) and each of the binary control signals delivered by the second digital table (20*B*) is sent to the input known as lower of the same first two-pole relay (*K*₁), and **in that** it includes means of function control (3) to generate a mode of function control signal (31) sent to said control inputs of said first two-pole relays (*K*₁) to route as output, when said mode of function control signal is in a first logic state, said inverse binary control signals as switching control signals of said low power switches (250*B* - 252*B*), so as to obtain said "full wave" mode of function of said power switches (250*H* to 252*B*), each of these power switches being controlled as all or nothing, alternately during two full consecutive half-periods (C₁₈₀), and, when said mode of function control signal is in a second logic state, said binary control signals delivered by the second digital table (20*B*), as switching control signals of said low power switches (250*B* to 252*B*), such that said power switches, high and low (250*H* to 252*B*), are controlled, as all or nothing, alternately during a fixed fraction of consecutive half-periods (C₁₂₀) depending on a particular coding of said digital words stored in said first and second digital tables and to obtain a different mode of function from said "full wave" mode.

8. Control device according to claim 7, **characterised in that** it includes a plurality of second (K₃) and a plurality of third (K₄) two-pole relays, equal in number to the number of said phases, each including two signal inputs, known as upper and lower, and a control input to selectively route said input signals to a single output, **in that** said second two-pole relays (K₃) each receive, at their input known as upper, one of said binary control signals (200*H* - 202*H*) delivered by said first digital table (20*H*), **in that** said third two-pole relays (K₄) each receive at their input known as upper one of said binary control signals present at the outputs of said first two-pole relays (K₁), and **in that** said function control means (3) generate as output a supplementary binary signal (33) taking two logic states, known as "ON/OFF", respectively, authorising transmission to said high and low power switches (250*H* to 252*B*), of the binary control signals (200*H* to 202*H*) delivered by said first digital table (20*H*) and present at the outputs of said first two-pole relays (K₁), when it is in said first state, and blocking them when it is in said second state.

9. Control device according to claim 8, **characterised in that** it contains means of storage with two binary positions (7), called logic states "1" and "0", **in that** it includes a plurality of fourth two-pole relays (K₂), equal in number to the number of said phases, containing two signal inputs, known as upper and lower, and a control input to route said input signals selectively to a single output, said storage means with two binary positions (7) and said plurality of fourth two-pole relays (K₂) authorising, depending on the logic states of dedicated mode control signals (32, 33), a short-circuit mode in the stator windings or a mode of disconnection of said stator windings.

10. Control device according to claim 7, **characterised in that** it contains means (6) for modification of the phase of said signal of the angular position of the rotor (θ(*t*)), **in that** said function control means (3) generate a supplementary signal (30) known as phase advance, **in that** said phase modification means (6) receive at a first input said phase advance signal (30) and at a second input the output signal (50) of said means of generation (5) of a signal representing the angular position of said rotor, so as to generate at their output a signal of the angular position of the rotor (60), the phase of which has been modified depending on the value of said phase advance signal (30).

11. Control device according to claim 10, **characterised in that** said phase advance signal (30) and said signal of the angular position of the rotor (50) being digital, said means of phase modification consist of a digital adder (6) with two inputs to which said signals (30, 50) are sent.

12. Control device according to any of the preceding claims, **characterised in that** the output of said means of generation of a signal representing the angular position of said rotor is connected to the input of hysteretic filtering means (22) and **in that** the output of said hysteretic filtering means generates a signal representing the filtered angular position of the rotor (θ(*t*)) utilised to address said digital tables.

13. Control device according to any of the preceding claims, **characterised in that** said digital tables (20) are read-only memories of the type known as "ROM", containing a fixed number of outputs delivering said binary control signals.

14. Control device according to claim 13, **characterised in that** said memories (20) contain eight outputs delivering binary control signals.

15. Control device according to any of the preceding claims, **characterised in that** said polyphase synchronous rotary electrical machine is an alternator-starter (10).

16. Control device according to claim 15, **characterised in that** said AC-DC current converter is a reversible AC-DC current converter (11).

17. Control device according to any of the preceding claims, **characterised in that** said power switches of said AC-DC current converter are MOSFET power transistors (110).

18. Control device according to any of the preceding claims, **characterised in that** said polyphase synchronous rotary electrical machine (10) is a three-phase machine.

19. Polyphase rotary electrical machine (10) containing a rotor (100) and a stator (104) **characterised in that** it includes a control device for an AC-DC current converter (11) associated with such a polyphase synchronous rotary electrical machine according to any of the preceding claims.

## Patentansprüche

1. Steuervorrichtung für einen AC/DC-Wandler, der einer mehrphasigen drehenden elektrischen Synchronmaschine zugeordnet ist, die einen und einen Stator umfasst, der eine der der Phasen entsprechende Mehrzahl an Wicklungen umfasst, die an ihren Enden miteinander verbunden sind, wobei der besagte AC/DC-Wandler zwischen der besagten mehrphasigen drehenden elektrischen Synchronmaschine und einer Gleichstromspeichereinheit ist, die positiv und negativ genannte Klemmen umfasst, und der besagte AC/DC-Wandler für jede Phase einen Zweig mit zwei in Serie geschalteten Leistungsschaltern - einem so genannten oberen und einem so genannten unteren Leistungsschalter - umfasst, der zwischen der besagten positiven und der besagten negativen Klemme angeordnet ist, wobei der Mittelpunkt zwischen einem oberen und einem unteren Leistungsschalter Ein- und/oder des besagten AC/DC-Wandlers und mit den besagten Verbindungsenden der besagten Wicklungen verbunden ist, wobei die Steuervorrichtung Mittel zum Erzeugen eines Ausgangssignals umfasst, das die Winkelposition des besagten Rotors darstellt, **dadurch gekennzeichnet, dass** sie mindestens eine numerische Tabelle (20) umfasst, die eine Mehrzahl von Speicherstellen zum Speichern von numerischen Wörtern umfasst, die von dem besagten Rotorwinkelpositionssignal (θ(*t*)) adressiert werden, und die an ihrem Ausgang eine der Anzahl der Phasen entsprechende Anzahl von binären Steuersignalen (200 - 202) liefert, wobei jedes binäre Steuersignal (200 - 202) die Umschaltung der besagten oberen und unteren Leistungsschalter (250*H* bis 252*B*) steuert, gemäß einer Zeitfolge, die in Abhängigkeit von dem Momentanwert des besagten Rotorwinkelpositionssignals (θ(*t*)) vorgegeben wird, das die besagten numerischen Tabellen (20) adressiert.

2. Steuervorrichtung nach Anspruch 1, **dadurch gekennzeichnet, dass** sie eine einzige numerische Tabelle (20) die von dem besagten Rotorwinkelpositionssignal (θ(*t*)) adressiert wird, und eine der Anzahl der Phasen entsprechende Mehrzahl von logischen Umkehrschaltungen (230 - 232), **dass** jedes der besagten, so genannten direkten binären Steuersignale (200 - 202) einerseits an den Eingang einer der besagten logischen Umkehrschaltungen (230 - 232) übertragen wird, um ein so genanntes inverses binäres Steuersignal zu erzeugen, und andererseits als Schaltsteuersignal an einen der so genannten oberen Leistungsschalter (250*H* - 252*H*) eines der besagten Zweige des besagten AC/DC-Wandiers (11) übertragen wird, und **dass** das besagte inverse binäre Steuersignal als Schaltsteuersignal an den so genannten unteren Leistungsschalter (250*B* - 252*B*) desselben Zweiges übertragen wird, um eine "Vollweg" genannte Betriebsart (C₁₈₀) der besagten Leistungsschalter (250*H* bis 252*B*) zu erhalten, wobei jeder dieser Leistungsschalter während zwei aufeinander folgenden vollen Halbperioden abwechselnd ein- und ausgeschaltet wird.

3. Steuervorrichtung nach Anspruch 1 , **dadurch gekennzeichnet, dass** sie eine erste (20H) und eine zweite (20B) numerische Tabelle umfasst, die beide von dem besagten Rotorwinkelpositionssignal (θ(*t*)) adressiert werden und an ihren Ausgängen die gleiche Anzahl der besagten paarigen binären Steuersignale (200*H* - 202*B*) liefern, **dass** jedes der besagten binären Steuersignale (200*H* - 202*B*), das von der besagten ersten numerischen Tabelle (20*H*) geliefert wird, als Schaltsteuersignal an der so genannten oberen Schalter (250*H* - 252*H*) der besagten Zweige übertragen wird, **dass** das besagte binäre Steuersignal (200*B -* 202*B*), das von der ihm zugeordneten besagten zweiten numerischen Tabelle (20*B*) geliefert wird, als Schaltsteuersignal an den so genannten unteren Leistungsschalter (250*B* - 252*B*) desselben Zweigs übertragen wird, so dass die besagten Leistungsschalter (250*H* bis 252*B*) während eines bestimmten Bruchteils aufeinander folgender Halbperioden (C₁₂₀) abwechselnd ein- und ausgeschaltet werden, in Abhängigkeit von einer besonderen Kodierung der besagten numerischen Wörter, die in der besagten ersten und zweiten numerischen Tabelle gespeichert sind, und so eine andere Betriebsart erzielt wird als der so genannte "Vollweg".

4. Steuervorrichtung nach Anspruch 1 , **dadurch gekennzeichnet, dass** sie eine einzige numerische Tabelle (20HB) umfasst, die von dem besagten Rotorwinkelpositionssignal (θ(*t*)) adressiert wird, **dass** der besagte einzige Speicher (20*HB*) am Ausgang eine erste Serie (200*H* - 202*H*) und eine zweite Serie (200*B* - 202*B*) paariger binärer Steuersignale in einer Anzahl liefert, die der Anzahl der besagten Phasen entspricht, **und dass** die besagten binären Steuersignale der besagten Paare (200*H* - 202*H*, 200*B* - 202*B*) als Schaltsteuersignale an die besagten so genannten oberen und unteren Leistungsschalter (250*H* bis 252*B*) desselben Zweigs übertragen werden, so dass diese besagten Leistungsschalter während eines bestimmten Bruchteils aufeinander folgender Halbperioden (C₁₂₀) abwechselnd ein- und ausgeschaltet werden, in Abhängigkeit von einer besonderen Kodierung der besagten numerischen Wörter, die in der besagten einzigen numerischen Tabelle gespeichert sind, und so dass eine andere Betriebsart erzielt wird als der so genannte "Vollweg",

5. Steuervorrichtung nach Anspruch 1, **dadurch gekennzeichnet, dass** sie eine einzige numerische Tabelle (20), die von dem besagten Rotorwinkelpositionssignal (θ(*t*)) adressiert wird, und eine der Anzahl der Phasen entsprechende Mehrzahl von
logischen "UND" Schaltungen (260 - 262) und von Umkehrschaltungen (230 - 232) umfasst, **dass** jede der besagten logischen "UND" Schaltungen (260 - 262) an einem ersten Eingang während bestimmter Zeiträume ein so genanntes Putslängensteuersignal (2720) in einem ersten logischen Zustand und an einem zweiten Eingang eines der besagten binären Steuersignale (200 - 202) empfängt, so dass am Ausgang während der besagten bestimmten Zeiträume ein so genanntes direktes binäres Steuersignal (2600 - 2602) erzeugt wird, **dass** das besagte direkte Steuersignal einerseits an den Eingang einer der besagten logischen Umkehrschaltungen (230 - 232) übertragen wird, um ein so genanntes inverses binäres Steuersignal zu erzeugen, und andererseits als Schaltsteuersignal an der so genannten oberen Leistungsschalter (250*H* - 252*H*) eines der besagten Zweige des besagten AC/DC-Wandlers (11) übertragen wird, **und dass** das besagte inverse binäre Steuersignal als Schaltsteuersignal an den so genannten unteren Leistungsschalter (250*B* - 252*B*) desselben Zweigs übertragen wird, so dass die besagten Leistungsschalter (250*H* bis 252*B*) während bestimmter Bruchteile aufeinander folgender Halbperioden, die von den besagten bestimmten Zeiträumen abhängig sind, die von dem besagten Pulslängensteuersignal (2720) vorgegeben werden, abwechselnd ein- und ausgeschaltet werden, und so dass eine "Pulslängenmodulation" genannte Betriebsart erzielt wird.

6. Steuervorrichtung nach Anspruch 5, **dadurch gekennzeichnet, dass** sie eine Schaltung zur Erzeugung des besagten Pulslängensteuersignals (27) umfasst, die Uhrschaltungen (271), die Sägezahnsignale mit einer bestimmten Frequenz liefern, eine Steuerschaltung (270), die ein Tastverhältnis-Steuersignal (2700) liefert, und eine Schwellenschaltung (272) umfasst, die an ihrem Ausgang das besagte Pulslängensteuersignal (2720) liefert, mit einem ersten logischen Zustand, wenn das Tastverhältnis-Steuersignal (2700) einen bestimmten Schwellenwert erreicht, und mit einem zweiten logischen Zustand unterhalb dieses Schwellenwerts, und dass das besagte Pulslängensteuersignal (2720) die Erzeugung der besagten direkten Steuersignale durch die besagten logischen Schaltungen "UND" (260 - 262) erlaubt, wenn es sich in dem besagten ersten logischen Zustand befindet,

7. Steuervorrichtung nach Anspruch 1, **dadurch gekennzeichnet, dass** sie eine erste (20*H*) und eine zweite (20*B*) numerische Tabelle umfasst, die beide von dem besagten Rotorwinkelpositionssignal (θ(*t*)) adressiert werden und an ihren Ausgängen die gleiche, der Anzahl der Phasen entsprechende Anzahl von paarigen binären Steuersignalen (200*H* - 202*H*, 200*B* - 202*B*) liefern, **dass** sie eine der Anzahl der besagten Phasen entsprechende Mehrzahl von logischen Umkehrschaltungen (230 - 232) und von ersten Zweiwegeschaltern (*K*₁) umfasst, die jeweils zwei Signaleingänge, einen so genannten oberen und einen so genannten unteren Signaleingang, und einen Steuereingang umfassen, um die besagten Eingangssignale selektiv zu einem einzigen Ausgang zu leiten, **dass** sie eine der Anzahl der besagten Phasen entsprechende Mehrzahl von logischen Umkehrschaltungen (230 - 232) umfasst, **dass** der so genannten direkten binären Steuersignale einerseits an den Eingang einer der besagten logischen Umkehrschaltungen (230 - 232) übertragen wird, um ein so genanntes inverses binäres Steuersignal zu erzeugen, und andererseits als Schaltsteuersignal an einen der so genannten oberen Leistungsschalter (250*H* - 252*H*) eines der besagten Zweige des besagten AC/DC-Wandlers (11) übertragen wird, **dass** jedes der besagten inversen binären Steuersignale an den besagten oberen Eingang eines der besagten ersten Zweiwegeschalter (*K*₁) und jedes der von der zweiten numerischen Tabelle (20*B*) gelieferten binären Steuersignale an den so genannten unteren Eingang desselben ersten Zweiwegeschalters (*K*₁) übertragen wird, **und dass** sie Mittel zur Funktionssteuerung (3) umfasst, zum Erzeugen eines Betriebsart-Steuersignals (31), das an die besagten Steuereingänge der besagten ersten Zweiwegeschalter (*K*₁) übertragen wird, um, wenn sich das besagte Betriebsart-Steuersignal in einem ersten logischen Zustand befindet, die besagten inversen binären Steuersignale am Ausgang als Schaltsteuersignale für die besagten unteren Leistungsschalter (250*B* - 252*B*) so zu leiten, dass die besagte Betriebsart "Vollweg" der besagten Leistungsschalter (250*H* bis 252*B*) erzielt wird, wobei jeder dieser Leistungsschalter während zwei aufeinander folgenden vollen Halbperioden (C₁₈₀) abwechselnd ein- und ausgeschaltet wird, und um, wenn sich das besagte Betriebsart-Steuersignal in einem zweiten logischen Zustand befindet, die von der zweiten numerischen Tabelle (20*B*) gelieferten binären Steuersignale als Schaltsteuersignale für die besagten unteren Leistungsschalter (250*B* bis 252*B*) so zu leiten, dass die besagten oberen und unteren Leistungsschalter (250*H* bis 252*B*) während eines bestimmten Bruchteils aufeinander folgender Halbperioden (C₁₂₀) abwechselnd ein- und ausgeschaltet werden, in Abhängigkeit von einer besonderen Kodierung der besagten numerischen Wörter, die in der besagten ersten und zweiten numerischen Tabelle gespeichert sind, und so dass eine andere Betriebsart erzielt wird als der so genannte "Vollweg".

8. Steuervorrichtung nach Anspruch 7, **dadurch gekenntzeichnet, dass** sie eine der Anzahl der Phasen entsprechende Mehrzahl von zweiten (*K*₃) und von dritten (*K*₄) Zweiwegeschaltern umfasst, die jeweils zwei Signaleingänge, einen so genannten oberen und einen so genannten unteren Signaleingang, und einen Steuereingang umfassen, um die besagten Eingangssignale selektiv zu einem einzigen Ausgang zu leiten, **dass** die besagten zweiten Zweiwegeschalter (*K*₃) an ihrem so genannten oberen Eingang jeweils eines der besagten binären Steuersignale (200*H* - 202*H*) empfangen, die von der besagten ersten numerischen Tabelle (20*H*) geliefert werden, **dass** die besagten dritten Zweiwegeschalter (*K*₄) an ihrem so genannten oberen Eingang jeweils eines der besagten binären Steuersignale empfangen, die an den Ausgängen der besagten ersten Zweiwegeschalter (*K*₁) anstehen, und **dass** die besagten Mittel zur Funktionssteuerung (3) am Ausgang ein zusätzliches binäres Steuersignal (33) erzeugen, das zwei "EIN" beziehungsweise "AUS" genannte logische Zustände annimmt und die Übertragung der binären Steuersignale (200*H* - 202*H*), die von der besagten ersten numerischen Tabelle (20*H*) geliefert werden und an den Ausgängen der besagten ersten Zweiwegeschalter (*K*₁) anstehen, an die besagten oberen und unteren Leistungsschalter (250*H* bis 252*B*) erlaubt, wenn es sich in dem besagten ersten Zustand befindet, und sie blockiert, wenn es sich in dem besagten zweiten Zustand befindet.

9. Steuervorrichtung nach Anspruch 8, **dadurch gekennzeichnet, dass** sie Speichermittel mit zwei binären Stellen (7) umfasst, den so genannten logischen Zuständen "1" und "0", **dass** sie eine der Anzahl der besagten Phasen entsprechende Mehrzahl von vierten Zweiwegeschaltern (*K*₂) umfasst, die jeweils zwei Signaleingänge, einen so genannten oberen und einen so genannten unteren Signaleingang, und einen Steuereingang umfassen, um die besagten Eingangssignale selektiv zu einem einzigen Ausgang zu leiten, wobei die besagten Speichermittel mit zwei binären Stellen (7) und die besagte Mehrzahl von vierten Zweiwegeschaltern (*K*₂) in Abhängigkeit von logischen Zuständen von dedizierten BetriebsaA-Steuersignalen (32, 33) einen Kurzschlussmodus der Statorwicklungen oder einen Trennungsmodus der besagten Statorwicklungen erlauben.

10. Steuervorrichtung nach Anspruch 7, **dadurch gekennzeichnet, dass** sie Mittel (6) zum Ändern der Phase des besagten Rotorwinkelpositionssignals (θ(*t*)) umfasst, **dass** die besagten Mittel zur Funktionssteuerung (3) ein zusätzliches so genanntes Phasenvoreilungssignal (30) erzeugen, **dass** die besagten Mittel zum Ändern der Phase (6) an einem ersten Eingang das besagte Phasenvoreilungssignal (30) und an einem zweiten Eingang das Ausgangssignal (50) der besagten Mittel zum Erzeugen eines Signals (5), das die Winkelposition des besagten Rotors darstellt, empfangen, so dass an ihrem Ausgang ein Rotorwinkelpositionssignal (60) erzeugt wird, dessen Phase in Abhängigkeit von dem Wert des besagten Phasenvoreilungssignals (30) geändert wird.

11. Steuervorrichtung nach Anspruch 10, **dadurch gekennzeichnet, dass** das besagte Phasenvoreilungssignal (30) und das besagte Rotorwinkelpositionssignal (50) numerisch sind und die besagten Mittel zum Ändern der Phase aus einem numerischen Summierer (6) mit zwei Eingängen bestehen, an die die besagten Signale (30, 50) übertragen werden.

12. Steuervorrichtung nach einem der vorhergehenden Ansprüche, **dadurch gekenntzeichnet**, **dass** der Ausgang der besagten Mittel zum Erzeugen eines Signals, das die Winkelposition des besagten Rotors darstellt, mit dem Eingang von hysteretischen Filtermitteln (22) verbunden ist, **und dass** der Ausgang dieser besagten hysteretischen Filtermittel ein Signal erzeugt, das die gefilterte Rotorwinkelposition (θ(*t*)) darstellt und verwendet wird, um die besagten numerischen Tabellen zu adressierten.

13. Steuervorrichtung nach einem der vorhergehenden Ansprüche, **dadurch gekennzeichnet, dass** die besagten numerischen Tabellen (20) Nur-Lese-Speicher des Typs "ROM" sind, die eine bestimmte Anzahl von Ausgängen umfassen, die die besagten binären Steuersignale liefern.

14. Steuervorrichtung nach Anspruch 13, **dadurch gekennzeichnet, dass** die besagten Speicher (20) acht Ausgänge umfassen, die binäre Steuersignale liefern.

15. Steuervorrichtung nach einem der vorhergehenden Ansprüche, **dadurch gekennzeichnet, dass** die besagte mehrphasige drehende elektrische Synchronmaschine ein Starter-Generator (10) ist.

16. Steuervorrichtung nach Anspruch 15, **dadurch gekennzeichnet, dass** der besagte AC/DC-Wandler ein umkehrbarer AC/DC-Wandler (11) ist.

17. Steuervorrichtung nach einem der vorhergehenden Ansprüche, **dadurch gekenntzeichnet**, **dass** die besagten Leistungsschalter des besagten AC/DC-Wandlers MOS-FET Leistungstransistoren (110) sind.

18. Steuervorrichtung nach einem der vorhergehenden Ansprüche, **dadurch gekenntzeichnet, dass** die besagte mehrphasige drehende elektrische Synchronmaschine (10) eine Drehstrommaschine ist.

19. Mehrphasige drehende elektrische Maschine (10), die einen Rotor (100) und einen Stator (104) umfasst, **dadurch gekennzeichnet, dass** sie eine Steuervorrichtung nach einem der vorhergehenden Ansprüche für einen AC/DC-Wandler (11) umfasst, der einer solchen mehrphasigen drehenden elektrischen Synchronmaschine zugeordnet ist.
